# EUROPEAN PATENT APPLICATION

(11) **EP 2 784 609 A2**
(43) Date of publication of application: **01.10.2014**
(21) Application number: 14161074.1
(22) Date of filing: 21.03.2014
(51) Int. Cl.: G05B 9/02

(54) **Control system for ridable machine and driving control unit**

(30) Priority: 29.03.2013 JP 2013073800
(71) Applicant: FUJITSU LIMITED, Kawasaki-shi, Kanagawa 211-8588 (JP); FUJITSU TEN, LTD., Kobe-shi, Hyogo, 652 (JP); Transtron, Inc., yokohama-shi, Kanagawa 222-0033 (JP)
(72) Inventor: Yonezaki, Keiichi, Hyogo, 652-8510 (JP); Nakamura, Shinji, Hyogo, 652-8510 (JP); Takagi, Tomoya, Hyogo, 652-8510 (JP)
(74) Representative: HOFFMANN EITLE

(57) **Abstract**

An operation control unit (30) and a driving control unit (40) mutually monitor an operation state of each other, and when a first control unit (40) detects an error of the other (second) control unit (30), the first control unit (40) performs a driving control on driving sources (50 and 60), at a speed more limited than that in a normal mode based on an operation signal.

## Description

### FIELD

The embodiments discussed herein are related to a control system for a ridable machine and a driving control unit.

### BACKGROUND

As an example of a technology of securing reliability against errors in control devices of an electric automobile, there is a technology disclosed in JP 4-150701 A. The technology disclosed in JP 4-150701 A provides a vehicle which drives right and left tires independently using a plurality of motors, in which a control of gradually stopping the motors is performed while making the speeds of the motors synchronous to each other by using microprocessors oriented to the right and left motors in response to a trouble of a microprocessor oriented to the vehicle.

However, in the technology disclosed in JP 4-150701 A, as described in, for example, paragraph 0032, when a trouble occurs in the microprocessor oriented to the vehicle, the states of the accelerator and the brake are no longer identified. For this reason, the right and left microprocessors oriented to the motors are merely available to perform a stop control of the vehicle in synchronism with each other. Therefore, when a trouble occurs in the microprocessor of the vehicle, it is no longer available to control the vehicle to travel for refuge into a safe zone.

### SUMMARY

An object of the invention is to make possible a refuge travel of a ridable machine into a safe zone, even when an error occurs in a control system for the ridable machine.

According to an aspect of the invention, there is provided a control system for a ridable machine. The control system may include a driving control unit configured to control a driving source of a ridable machine, and an operation control unit configured to control the driving control unit according to an operation signal of the ridable machine. The respective control units mutually monitor an operation state of each other, and when a first control unit of the control units detects an error of the other (second) control unit, the first control unit performs a driving control on the driving source at a speed more limited than that in a normal mode based on the operation signal.

Even when an error occurs in the control system for the ridable machine, it is possible to safely evacuate the ridable machine.

The object and advantages of the invention will be realized and attained by means of the elements and combinations particularly pointed out in the claims.

### BRIEF DESCRIPTION OF DRAWINGS

FIG. 1 is a block diagram illustrating an example of a vehicle control system according to an embodiment;
FIG. 2 is a diagram for describing a mutual monitoring state between a VCU and an MCU illustrated FIG. 1;
FIG. 3 is a flowchart for describing an example of vehicle travelling control performed by the vehicle control system illustrated in FIG. 1;
FIG. 4 is a flowchart for describing an example of the vehicle travelling control performed by the vehicle control system illustrated in FIG. 1;
FIG. 5 is a block diagram illustrating a modified example of the vehicle control system illustrated in FIG. 1; and
FIG. 6 is a flowchart for describing an example of the vehicle travelling control performed by the vehicle control system according to the modified example.

### DESCRIPTION OF EMBODIMENTS

Hereinafter, embodiments of the invention will be described with reference to the drawings. However, the embodiments in the following description are mere examples, and this is not intended to exclude applications of various modifications and technologies not specified in the following. Further, in the drawings used in the following embodiments, portions denoted with the same reference numerals represent the identical or similar portions unless otherwise mentioned.

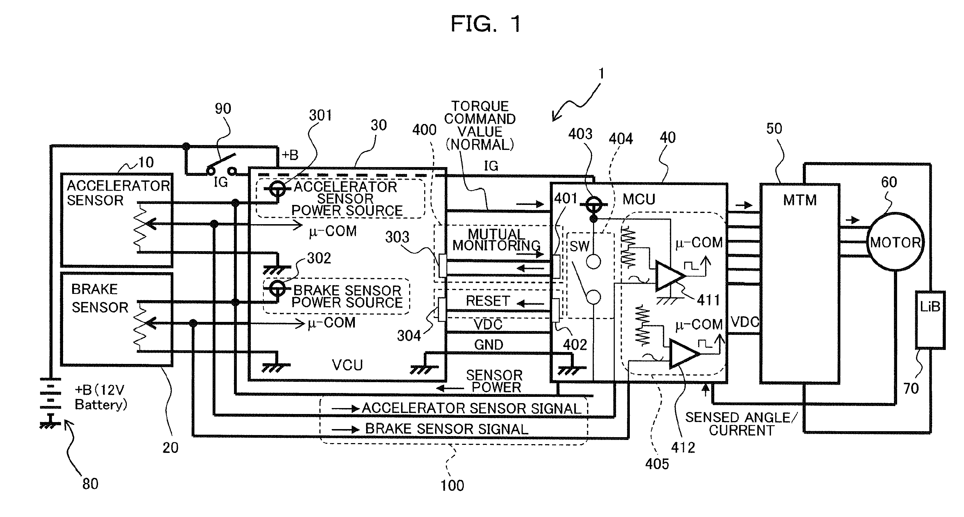

FIG. 1 is a block diagram illustrating an example of a vehicle control system according to an embodiment. A vehicle control system 1 illustrated in FIG. 1, for example, is used in a next-generation electric automobile (that is an example of ridable machines) such as an electric vehicle (EV) and a hybrid electric vehicle (HEV). The vehicle control system 1, for example, is provided with an accelerator sensor 10, a brake sensor 20, a vehicle control unit (VCU) 30, a motor control unit (MCU) 40, a motor train module (MTM) 50, a motor 60, a lithium-ion battery (LiB) unit 70, an ignition (IG) voltage source 80, and an IG switch 90.

The accelerator sensor 10 is operable to sense information (for example, voltage information) of an accelerator opening degree (stepping amount) of a vehicle and transmit the obtained information to the VCU 30 as an accelerator sensor signal.

The brake sensor 20 is operable to sense information (for example, voltage information) of a brake stepping amount of the vehicle and transmit the obtained information to the VCU 30 as a brake sensor signal.

The accelerator sensor 10 and the brake sensor 20 operates with power supplied from the VCU 30 in a normal mode. The accelerator sensor signal and the brake sensor signal are examples of operation signals of the vehicle. Further, the respective sensor signals obtained by the accelerator sensor 10 and the brake sensor 20 are also input to the MCU 40 in addition to the VCU 30 for a case where an error occurs in the VCU 30 as described later (see Reference Numeral 100 of FIG. 1).

The VCU 30 is an example of an operation control unit operable to control the travelling of the vehicle by transmitting a travelling control signal such as a torque command value to the MCU 40 based on the accelerator sensor signal and the brake sensor signal obtained by the accelerator sensor 10 and the brake sensor 20, respectively.

For example, the VCU 30 is operable to calculate a travelling torque and give a regeneration command based on the accelerator sensor signal, calculate the amount of regeneration energy, give a command, and control drivability based on the brake sensor signal. The travelling control signal, for example, may be generated by a microcomputer or the like built in the VCU 30.

Further, the VCU 30 is provided with an accelerator sensor power source 301 which supplies power to the accelerator sensor 10 and a brake sensor power source 302 which supplies power to the brake sensor 20. Furthermore, the VCU 30 is provided with a function of monitoring a battery voltage (VDC) which is supplied to the MTM 50 from the LiB unit 70. The VDC, for example, is measured by the MTM 50 which is supplied with power from the LiB unit 70, and sent to the VCU 30 through the MCU 40.

In the VCU 30 illustrated in FIG. 1, Reference Numeral 303 represents a mutual monitor, and Reference Numeral 304 represents a reset signal receiver. The mutual monitor 303 and the reset signal receiver 304 will be described later.

The MCU 40 is an example of a driving control unit operable to control a driving force of the motor 60 by controlling a driving power supplied from the MTM 50 to the motor 60 according to the travelling control signal received from the VCU 30. For example, the MCU 40 performs a feedback control on the motor 60 based on the torque command value and the sensor signals of an angle sensor (a resolver) and a current sensor provided for the motor 60 so that the torque of the motor 60 is matched with the torque command value commanded from the VCU 30.

The MTM 50 receives a power voltage (or a battery voltage) from the LiB unit 70, generates a driving voltage (for example, DC 200 V to 300 V) for the motor 60 according to the driving power controlled from the MCU 40, and supplies the driving power of three-phase AC power to the motor 60. For example, the MTM 50 is provided with an inverter (not illustrated) including IGBTs and the like, and uses the inverter to generate the driving power for the motor 60.

The motor 60 is an example of a driving source of the vehicle, for example, a three-phase synchronous motor. The motor 60 is provided with the resolver and the current sensor described above. Further, some types of the motor 60 may be built in the MTM 50.

The LiB unit 70 is operable to supply the power voltage (the battery voltage) to the MTM 50. The LiB unit 70, for example, is configured by connecting a plurality of battery cells in series or parallel. An operation of inputting voltage, current, and temperature of the LiB unit 70, a control for safety, a control of balancing voltages among the battery cells, an operation of calculating a used energy amount and a remaining battery capacity, an operation of estimating a degradation state, and the like are performed by a battery control unit (BCU) which is not illustrated in FIG. 1.

The IG voltage source 80 supplies a power voltage (for example, 12V) common to the VCU 30 and the MCU 40. When the IG switch 90 is turned on, the VCU 30 is activated, and then an activating command is given from the VCU 30 to the MCU 40 through a communication interface such as a serial-to-parallel interface (SPI), thereby the MCU 40 is activated.

In addition to the above-mentioned functions, the MCU 40 according to the embodiment is provided with a mutual monitor 401, a reset signal generator 402, a sensor power source 403, a sensor power source switch 404, and a refuge travelling mode controller (hereinafter, may be referred to as a "safe mode controller") 405. Further, the meaning of the "safe mode" will be described below.

The mutual monitor 401 is, for example, operable to periodically transceive a predetermined signal with respect to the VCU 30 through a communication interface such as the SPI (see Reference Numeral 400 of FIG. 1) to monitor whether the VCU 30 is in error or not.

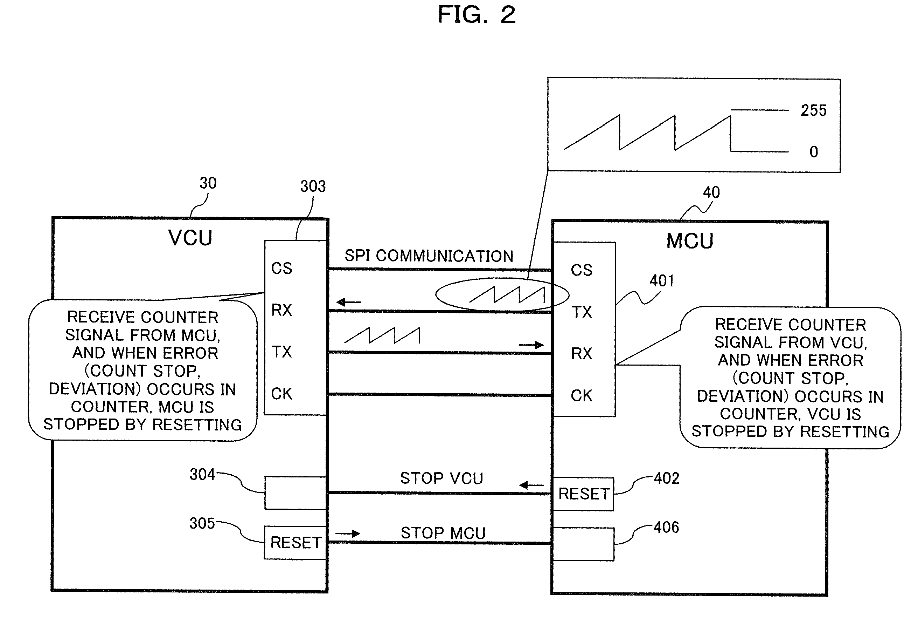

For example, as illustrated in FIG. 2, the VCU 30 and the MCU 40 transmit a pulse train (for example, a sawtooth counter signal in FIG. 2), which has a predetermined amplitude (for example, a count number in a range of 0 to 255), to each other from the mutual monitors 303 and 401. In a case where an error such as count stop and deviation occurs in the counter signal, one of the VCU 30 and the MCU 40 detecting the error determines that the other control unit (hereinafter, may be referred to as the other party) is in error.

The MCU 40 or the VCU 30, which determines that an error occurs in the other, is operable to transmit a reset signal (a stop control signal) to the other party from the reset signal generator 402 or 305 (see FIG. 2) which is an example of a stop control signal transmitter. The reset signal is received by a reset signal receiver 304 in the VCU 30 and is received by a reset signal receiver 406 in the MCU 40. The VCU 30 or the MCU 40 which has received the reset signal stops its operation.

In addition, when the reset signal is received by the reset signal receiver 304, the VCU 30 shuts down the accelerator sensor power source 301 and the brake sensor power source 302. The reset signal generator 305 of the VCU 30 and the reset signal receiver 406 of the MCU 40 are not illustrated in FIG. 1.

In a case where the error of the VCU 30 is detected and the reset signal is transmitted to the VCU 30, the sensor power source 403 (see FIG. 1) instead of the VCU 30 supplies power to the accelerator sensor 10 and the brake sensor 20 for the operations thereof. For this reason, the sensor power source switch 404 is normally in an OFF state, and is controlled to an ON state when the error of the VCU 30 is detected and the reset signal is transmitted to the VCU 30.

In this way, in a case where the MCU 40 supplies power to the accelerator sensor 10 and the brake sensor 20 instead of the VCU 30, the accelerator sensor power source 301 and the brake sensor power source 302 of the VCU 30 are shut down by the reset signal. Therefore, even when an error occurs in one or both of the accelerator sensor power source 301 and the brake sensor power source 302 of the VCU 30, the respective sensors 10 and 20 can be stably supplied with power, and the MCU 40 can obtain the accurate sensor signals.

The refuge travelling mode controller 405 is an example of a speed limit controller operable to, instead of the VCU 30, control the MTM 50 based on the sensor signals input from the respective sensors 10 and 20 in response to the power supplement by the sensor power source 403 to thereby control the motor 60 at a constant speed. With this configuration, the vehicle can be travelled at a constant speed. Therefore, even when an error occurs in the VCU 30, the vehicle can travel for refuge into a safe zone under control alternatively performed by the MCU 40. Hereinafter, such control may be referred to as "safe mode control" or an "refuge travelling mode".

Herein, since the vehicle is merely available to travel for refuge, the MCU 40 is unnecessary to linearly control the rotation speed of the motor 60 according to the values of the accelerator sensor signal and the brake sensor signal. Instead, the MCU 40 may keep the rotation speed (the speed of the vehicle) of the motor 60 at a constant low speed state based on the ON/OFF states of the accelerator sensor signal and the brake sensor signal.

The "low speed state" means a speed more limited than that in a normal mode such as a speed sufficient to perform the refuge travelling of the vehicle. For example, the "low speed" may be set to several km/h or several tens of km/h. Hereinafter, such a speed may be referred to as a "safe speed (or refuge speed)". In this case, while a maximum speed is limited to the safe speed during the safe mode control, the speed of the vehicle may be linearly controlled based on the accelerator sensor signal and the brake sensor signal until reaching the safe speed.

The following Table 1 illustrates an example of control logic in which the motor 60 (the vehicle) is controlled based on the ON/OFF states of the accelerator sensor signal and the brake sensor signal by the MCU 40 (the safe mode controller 405).

**[Table 1]**

| State | Logic | | | |
|---|---|---|---|---|
| Accelerator Sensor | ON | ON | OFF | OFF |
| Brake Sensor | ON | OFF | ON | OFF |
| Motor | Stop | Constant speed rotation | Stop | Stop |
| Vehicle | Stop | Refuge travelling | Stop | Stop |

As listed in Table 1, during the safe mode control, when the accelerator sensor signal is in the "ON" state and the brake sensor signal is in the "OFF" state, the vehicle can travel at a constant speed (refuge travelling). Meanwhile, when the brake sensor signal is in the "ON" state, the brake sensor signal is taken precedence over the accelerator sensor signal, and the motor 60 stops irrespective of the ON/OFF states of the accelerator sensor signal to stop the vehicle.

In the MCU 40 (the safe mode controller 405), the ON/OFF states of the accelerator sensor signal and the brake sensor signal are determined in comparison with a predetermined threshold. For example, assuming that the threshold of the accelerator sensor signal (voltage) Va is Vth3 and the threshold of the brake sensor signal (voltage) Vb is Vth4, the MCU 40 determines that the accelerator sensor signal is in the "ON" state when Va > Vth3, and determines that the brake sensor signal is in the "ON" state when Vb > Vth4. On the contrary, the MCU 40 determines that the accelerator sensor signal is in the "OFF" state when Va ≤ Vth3, the brake sensor signal is in the "OFF" state when Vb ≤ Vth4.

The comparison between Va and Vth3 and the comparison between Vb and Vth4, for example, can be performed using comparators 411 and 412 (see FIG. 1), respectively. The comparison results of the comparators 411 and 412 are sent to an arithmetic processing circuit such as a microcomputer serving as the safe mode controller 405, and the control is performed by the arithmetic processing circuit according to the logic listed in Table 1.

Further, the MCU 40 may be provided with a function of monitoring one or both of the battery voltage (a LiB voltage) of the LiB unit 70 and an IG voltage. When one or both of the monitored LiB voltage and the monitored IG voltage, for example, is equal to or less than the respective thresholds, the MCU 40 may cause the motor 60 to stop (vehicle stop) instead of performing the safe mode control irrespective of the ON/OFF states of the accelerator sensor signal and the brake sensor signal.

For example, when the LiB voltage is equal to or less than a threshold (Vth2), the MCU 40 (the safe mode controller 405) determines that the LiB unit 70 has not remaining battery capacity sufficient to perform the refuge travelling or that some kinds of errors occur in the LiB unit 70, and performs a stop control on the motor 60 (the vehicle).

Further, when the IG voltage is equal to or less than the threshold (Vth1), the safe mode controller 405 determines that some kinds of errors occur in the power voltages each supplied to the VCU 30 and the MCU 40, and performs a stop control on the motor 60 (the vehicle).

By taking these operations, it is possible to improve the safety of the safe mode control, and thus it is also possible to prevent an unintended travelling of the vehicle.

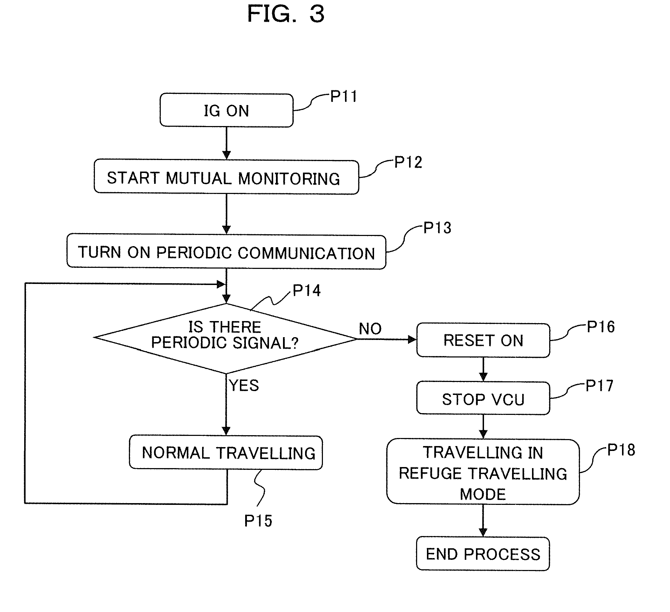

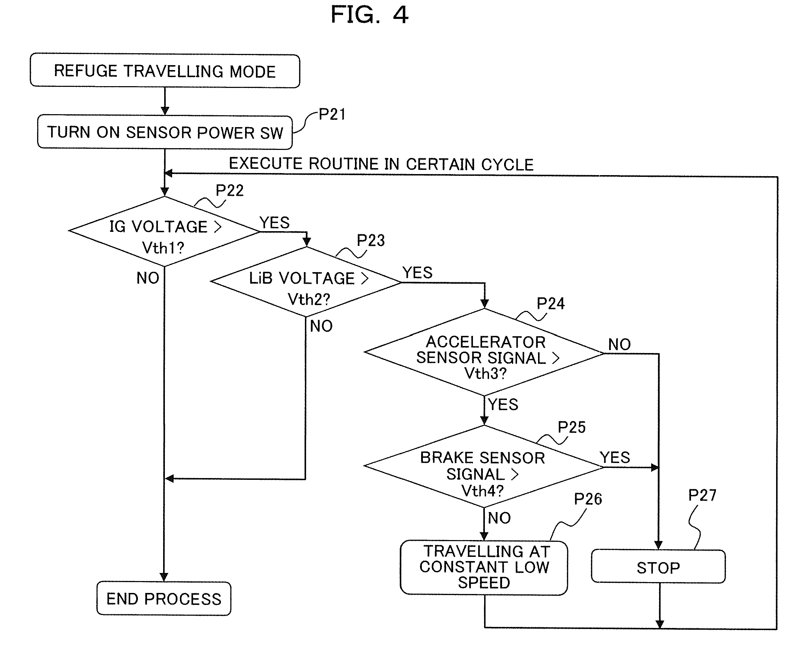

Hereinafter, an example of vehicle travelling control of the vehicle control system 1 will be described with reference to the flowcharts illustrated in FIGS. 3 and 4.

As illustrated in FIG. 3, when the IG switch of the vehicle is turned on (Process P11), the MCU 40 periodically communicates with the VCU 30 through the SPI or the like to thereby periodically monitor whether an error occurs in the VCU 30 (Processes P12 to P14).

When a signal is periodically received from the VCU 30, the MCU 40 performs a normal mode control to control the MTM 50 according to the travelling control signal from the VCU 30. As a result, the motor 60 is controlled at a normal rotation speed to cause the vehicle to travel in the normal mode (Process P15).

On the other hand, when the signal is not periodically received from the VCU 30, the MCU 40 generates a reset signal using the reset signal generator 402, and transmits the reset signal to the VCU 30 (Process P16).

Upon receiving the reset signal from the MCU 40, the VCU 30 shuts down the accelerator sensor power source 301 and the brake sensor power source 302, and stops its operation (Process P17).

After transmitting the reset signal to the VCU 30, the MCU 40 performs the refuge travelling mode (Process P18). For example, as illustrated in FIG. 4, the MCU 40 performs a control of turning on the sensor power source switch 404 to supply power from the sensor power source 403 to the accelerator sensor 10 and the brake sensor 20 (Process P21).

Thereafter, the MCU 40 checks the respective voltages by causing the safe mode controller 405 to compare the IG voltage, the LiB voltage, the accelerator sensor signal, and the brake sensor signal with the respective thresholds (Vth1 to Vth4) (Processes P22 to P25).

When the IG voltage is equal to or less than the threshold Vth1 (NO in Process P22), the MCU 40 (the safe mode controller 405) ends the process. In addition, when the IG voltage exceeds the threshold Vth1 but the LiB voltage is equal to or less than the threshold Vth2 (YES in Process P22 and NO in Process P23), the safe mode controller 405 also ends the process.

Although the comparisons (voltage checking) with the thresholds Vth1 and Vth2 are performed in the order of the IG voltage and the LiB voltage as illustrated in FIG. 4, the comparisons may be performed in the reverse order. Further, the comparisons may be performed at the same timing. Furthermore, the checking of one or both of the IG voltage and the LiB voltage is not essential and may be passed.

Further, when the IG voltage and the LiB voltage exceed the thresholds Vth1 and Vth2 (YES in Processes P22 and P23) respectively and the accelerator sensor signal is equal to or less than the threshold Vth3 (NO in Process P24), the safe mode controller 405 stops the driving of the motor 60 (vehicle stop) (Process P27).

In addition, when the IG voltage, the LiB voltage, and the accelerator sensor signal exceed the thresholds Vth1, Vth2, and Vth3 (YES in Processes P22, P23 and P24) respectively and the brake sensor signal exceeds the threshold Vth4 (YES in Process P25), the safe mode controller 405 also stops the driving of the motor 60 (vehicle stop) (Process P27).

Meanwhile, when the IG voltage, the LiB voltage, and the accelerator sensor signal exceed the thresholds Vth1, Vth2, and Vth3 (YES in Processes P22, P23 and P24) respectively and the brake sensor signal is equal to or less than the threshold Vth4 (NO in Process P25), the safe mode controller 405 controls the motor 60 at a constant rotational frequency so as to make the vehicle travel at a constant speed (refuge travelling) (Process P26). In other words, the safe mode controller 405 controls the motor 60 at a constant rotational frequency irrespective of the accelerator stepping amount indicated by the accelerator sensor signal (irrespective of the speed value of the vehicle indicated by the operation signal) so as to make the vehicle travel at a constant speed.

Processes P22 to P27 (the vehicle travelling control based on the voltage checking) described above may be periodically repeated. Further, in FIG. 4, although the comparisons (voltage checking) with the thresholds Vth3 and Vth4 are performed in the order of the accelerator sensor signal and the brake sensor signal, the comparisons may be performed in the reverse order. In addition, the comparisons may be performed at the same timing.

As described above, according to the above-mentioned embodiments, even though an error occurs in the VCU 30, the MCU 40 instead of the VCU 30 controls the motor 60 at a constant rotational frequency based on the ON/OFF logic of the accelerator sensor signal and the brake sensor signal. Therefore, the vehicle can travel for safe refuge.

### (Modification)

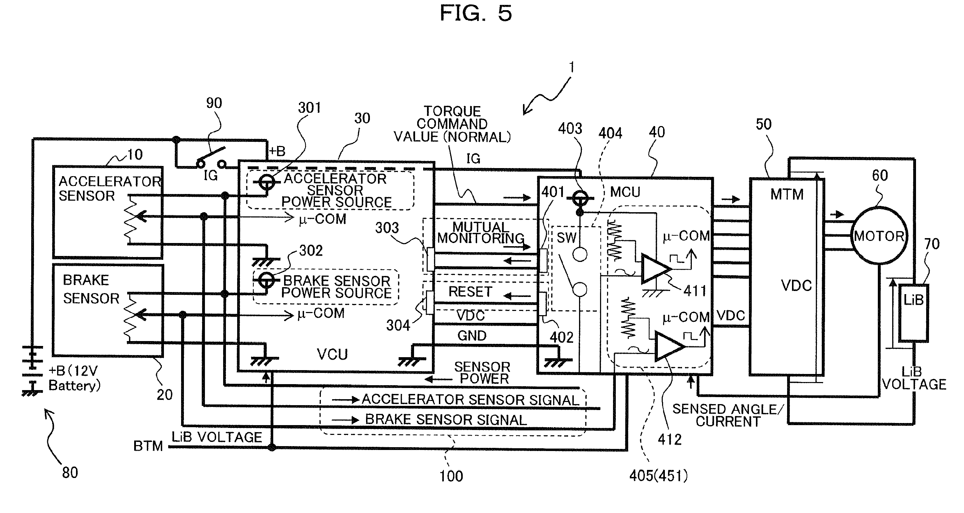

FIG. 5 is a block diagram illustrating a modified example of the vehicle control system illustrated in FIG. 1. The vehicle illustrated in FIG. 5 is different in that an inverter error determiner 451 is provided in the MCU 40 (for example, the safe mode controller 405) compared to the configuration depicted in FIG. 1.

The inverter error determiner 451 is operable to compare a voltage VDC (for example, a voltage between both ends of an inverter (not illustrated) provided in the MTM 50) between both ends of the MTM 50 and a voltage (the LiB voltage) between both ends of the LiB unit 70. For example, the VDC can be obtained by the SPI communication as described above. Meanwhile, the LiB voltage can be obtained from, for example, a battery monitoring module (BTM) which monitors the battery voltage of the LiB unit 70. The information of the LiB voltage is input to both of the VCU 30 and the MCU 40. During a normal mode operation, the VCU 30 monitors the LiB voltage and performs a control depending on the monitored result (for example, a vehicle speed limitation and the like). On the other hand, during the refuge travelling mode, the MCU 40 checks the LiB voltage and performs a control depending on the check result.

For example, when the VDC and the LiB voltage are not matched with each other, the MCU 40 (the safe mode controller 405) determines that an error of the inverter occurs in the MTM 50, and does not perform the above-mentioned safe mode control.

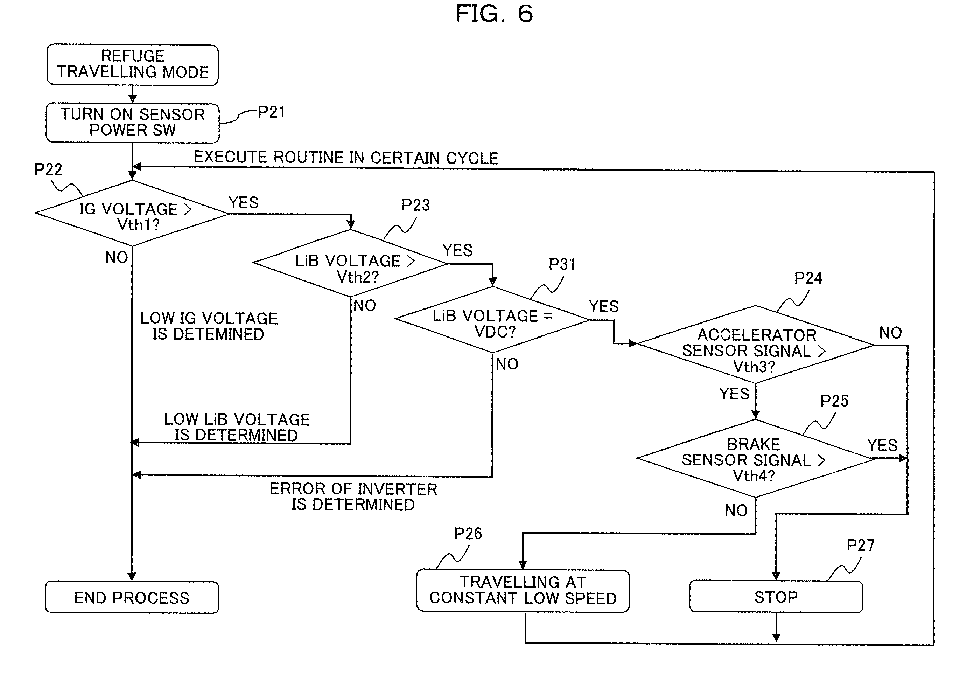

FIG. 6 illustrates an operational example (a modification of FIG. 4). In FIG. 6, Process P31 in which the LiB voltage is compared with the voltage VDC is added by comparison with FIG. 4. As a comparison result of Process P31, in a case where the LiB voltage and the voltage VDC are not matched with each other (NO in Process P31), the MCU 40 ends the process instead of performing the safe mode control.

Therefore, it is possible to prevent an unexpected travelling of the vehicle from performing the safe mode control under a possible error of the inverter in the MTM 50. Meanwhile, when the LiB voltage and the voltage VDC are matched with each other (YES in Process P31), the safe mode control is performed as depicted in FIG. 4.

### (Others)

The aforementioned embodiments have been described about an example in which, when an error occurs in one of the VCU 30 and the MCU 40, specifically the VCU 30, the MCU 40 performs the safe mode control instead of the VCU 30, but the embodiments may be applied to the opposite situation. For example, when the VCU 30 detects that an error occurs in the MCU 40 during the mutual monitoring, the VCU 30 may perform the safe mode control instead of the MCU 40.

In addition, the aforementioned embodiments have been described about an example in which the safe mode control is applied to an automobile (a vehicle) such as the EV and the HEV, but the embodiments may be generally applied to other "ridable machines" such as railway vehicles and ships.

According to the aforementioned technology, even though an error occurs in the control system for the ridable machine, the ridable machine can be safely evacuated.

## Claims

1. A control system for a ridable machine, comprising:
a driving control unit (40) configured to control a driving source (50, 60) of a ridable machine (1); and
an operation control unit (30) configured to control the driving control unit according to an operation signal of the ridable machine, wherein
the respective control units (30, 40) mutually monitor an operation state of each other, and
when one of the control units detects an error of the other control unit, the control unit detecting the error performs a driving control on the driving source (50, 60) at a speed more limited than that in a normal mode based on the operation signal.

2. The control system according to claim 1, wherein
the control unit (40) detecting the error is the driving control unit,
the operation signal includes an accelerator sensor signal sensed by an accelerator sensor (10) of the ridable machine (1), and a brake sensor signal sensed by a brake sensor (20) of the ridable machine (1), and
when the accelerator sensor signal is in the ON state and the brake sensor signal is in the OFF state, the driving control unit (40) performs a driving control on the driving source (50, 60) at a constant speed irrespective of an accelerator stepping amount indicated by the accelerator sensor signal.

3. The control system according to claim 2, wherein
when the brake sensor signal is in the ON state, the driving control unit (40) performs a stop control on the driving source (50, 60) irrespective of the ON/OFF states of the accelerator sensor signal.

4. The control system according to claim 2 or 3, wherein
in response to a detection of the error, the driving control unit (40) performs a stop control on the operation control unit (30).

5. The control system according to claim 4, wherein
the driving control unit (40) comprises a sensor power source (403) which supplies power to the respective sensors (10, 20) instead of the operation control unit (30).

6. The control system according to any one of claims 1 to 5, wherein
the control unit detecting the error monitors one or both of an ignition voltage of the ridable machine (1) and a battery voltage supplied to the driving source (50, 60), and stops the driving control when one or both of the ignition voltage and the battery voltage is equal to or less than a corresponding predetermined threshold.

7. The control system according to any one of claims 1 to 6, further comprising a driving module (50, 60) configured to drive the driving source using an inverter which is driven by being supplied with a battery voltage, wherein
the control unit detecting the error stops the driving control when the battery voltage and a voltage between both ends of the inverter are not matched to each other.

8. A driving control unit used in a control system for a ridable machine, the control system including a driving control unit (40) configured to control a driving source (50, 60) of a ridable machine (1) and an operation control unit (30) configured to control the driving control unit (40) according to an operation signal of the vehicle (1), the driving control unit (40) comprising:
a monitor (401) configured to monitor an operation state of the operation control unit (30); and
a speed limit controller (405) configured to perform a driving control on the driving source (60) at a predetermined speed based on the operation signal irrespective of a speed value of the ridable machine (1) indicated by the operation signal, upon detecting an error of the operation control unit (30) by the monitor (401).

9. The driving control unit according to claim 8, wherein
the operation signal includes an accelerator sensor signal sensed by an accelerator sensor (10) of the ridable machine (1), and a brake sensor signal sensed by a brake sensor (20) of the ridable machine (1), and
when the accelerator sensor signal is in the ON state and the brake sensor signal is in the OFF state, the speed limit controller (405) performs the driving control on the driving source (50, 60) at a constant speed more limited than that in a normal mode.

10. The driving control unit according to claim 9, wherein
when the brake sensor signal is in the ON state, the speed limit controller (405) performs a stop control on the driving source (50, 60) irrespective of the ON/OFF states of the accelerator sensor signal.

11. The driving control unit according to claim 9 or 10, further comprising a stop control signal transmitting unit (402) configured to transmit a stop control signal to the operation control unit (30) in response to a detection of the error.

12. The driving control unit according to claim 11, further comprising a sensor power source (403) configured to supply power to the respective sensors (10, 20) instead of the operation control unit (30).

13. The driving control unit according to any one of claims 8 to 12, wherein
the speed limit controller (405) monitors one or both of an ignition voltage of the ridable machine (1) and a battery voltage supplied to the driving source (50, 60), and stops the driving control when one or both of the ignition voltage and the battery voltage is equal to or less than a corresponding predetermined threshold.

14. The driving control unit according to any one of claims 8 to 13, wherein
the driving source (50, 60) is driven by a driving module using an inverter which is driven by being supplied with a battery voltage, and
the speed limit controller (405) stops the driving control when the battery voltage and a voltage between both ends of the inverter are not matched to each other.
